# EUROPEAN PATENT SPECIFICATION

(11) **EP 3 543 302 B1**
(45) Date of publication and mention of the grant of the patent: **17.03.2021**
(21) Application number: 18305316.4
(22) Date of filing: 22.03.2018
(51) Int. Cl.: C09D 125/14

(54) **COMPOSITION FOR HARD SURFACE SUBSTRATE MARKING**
ZUSAMMENSETZUNG ZUR MARKIERUNG VON SUBSTRATEN MIT HARTER OBERFLÄCHE
COMPOSITION POUR MARQUAGE DE SUBSTRAT À SURFACE DURE

(43) Date of publication of application: 25.09.2019
(73) Proprietor: Coatex, 69730 Genay (FR)
(72) Inventor: FOGUTH, Alexandra, CHARLOTTE, NC 28269 (US); HOWELL, Lori, PROSPERITY, SC 29137 (US); LEE, Haksu, WAXHAW, NC 28173 (US)
(74) Representative: Balmefrezol, Ludovic Francis Pierre

(56) References cited:
- WO-A1-2012/130817
- DE-A1- 10 331 053
- US-B2- 8 268 404

## Description

The invention relates to the field of marking hard surface substrates, in particular to the field of traffic paints. The invention thus provides an aqueous composition useful for marking hard surface substrates. The composition according to the invention comprises a binder and a pigment that is dispersed with a particular (meth)acrylic polymer.
The invention also provides a method for preparing such a composition as well as a method for marking a hard surface substrate with such a composition.

Compositions comprising a binder and a pigment dispersed with a dispersing agent for marking hard surface substrates are known. In particular, there exists such compositions for the preparation of traffic paints. Generally, the binder that is used in such compositions is a latex binder.
An essential property for such compositions is their ability to dry rapidly once applied on a hard substrate, in particular on a substrate that is aimed for traffic of vehicles or for traffic of persons. Fast drying is of particular importance in high humidity conditions.
Good drying time normally corresponds to improved performance in certain tests, notably in test where no-pick up time of a film coating is measured.
A consequence of improving fast drying of such compositions is generally a negative impact on their stability.
There is thus a need for such compositions having improved stability, in particular for such compositions having improved stability while minimizing their drying time.

Traffic paints should also provide for good wear resistance, either for safety reasons but also for economic reasons. Wear resistance of a film coating is normally the ability of this film coating applied on a surface to resist to detachment or separation from the substrate. Such a detachment or separation can occur for various reasons but is normally depending from the use conditions of the film coating that include the level of traffic, the weather conditions as well as the intrinsic specifications of the film coating.

Known dispersant agents used in compositions for traffic paints are ammonium salts of polyacrylic acid or ammonium salts of polymethacrylic acid, wherein volatility of ammonia is considered helping accelerating drying time of these compositions.

However, stability of these known compositions is not always sufficient or not always satisfying.

Apart, controlling the rheology, in particular the viscosity, of compositions for marking hard surface substrates is also an essential property, either during their preparation but also during their application. Improving the stability of these compositions during their shelf life is also necessary.

Controlling the rheology, in particular the viscosity, of such compositions also allows for an easier use, notably in situations where these compositions must be pumped or must be sprayed. Relevant compositions have been disclosed in US_b-8268404.

Fineness of ground pigments used in paints is also important since coarse pigment particles generally reduce the properties of a paint, notably color uniformity and opacity. Grinding efficiency of the pigment, including grinding time, is also important in the course of preparing the pigments to be incorporated in the compositions for marking hard surface substrate.

Satisfying regulations or certain standards is also important for compositions for marking hard surface substrates, notably for traffic paints, in particular when shorter drying time is required.

Known compositions do not always provides the necessary properties for addressing these problems. There is thus a need for improved compositions for marking hard surface substrates, notably for traffic paints.

The composition according to the invention provides a solution to all or part of these problems.

The invention thus provides an aqueous hard surface substrate marking composition comprising:
(a) at least one binder;
(b) at least one pigment;
(c) at least one polymer
   - obtained further to at least one polymerization reaction of at least one monomer selected from acrylic acid, methacrylic acid, itaconic acid and their salts, and
   - partially or totally neutralized
      - by at least one divalent cation or
      - by at least one divalent cation and at least one monovalent cation or
      - by at least one divalent cation and at least one amino compound.

The aqueous composition according to the invention is a waterborne composition whereby its active components are conveyed by water.

Preferably, the hard surface substrate marking composition according to the invention comprises:
- from 14.8 to 54.8 weight %, more preferably from 24.5 to 49.5 weight %, of at least one binder (a) ;
- from 45 to 85 weight %, more preferably from 50 to 75 weight %, of at least one pigment (b) ;
- from 0.2 to 10 weight %, more preferably from 0.5 to 5 weight %, of at least one polymer (c).

Preferably according to the invention, the substrate is selected from wood, reconstituted wood products, concrete, asphalt, cement, fiber cement, stone, marble, clay, plaster, masonry, wallboard, paper, cardboard, ferrous metal, non-ferrous metal, plastics (for example, polystyrene, polyethylene, ABS, polyurethane, polyethylene terphthalate, polybutylene terphthalate, polypropylene, polyphenylene, polycarbonate, polyacrylate, PVC, polysulfone or mixtures thereof) and combinations thereof. The preferred substrate according to the invention is selected from concrete, asphalt, cement, fiber cement, stone, marble, clay, plaster, masonry, wallboard and combinations thereof, while the preferred substrate according to the invention is selected from concrete and asphalt.

For the composition according to the invention, binder (a) can be selected in a broad range of binders. Advantageously, binder (a) renders the composition according to the invention being capable of forming a film at ambient temperature or at a greater temperature, preferably at a temperature between 20 and 55 °C.

Preferably, binder (a) has glass transition temperature (T_{g}) greater than -40 °C or below the application temperature of the composition. More preferably the T_{g} of binder (a) is between -40 and 150 °C, even more preferably between -20 and 100 °C or between -10 and 60 °C, in particular between 0 and 50 °C.
Also preferably, binder (a) is a polymer latex. Still also preferably, binder (a) is selected from polyvinyl acetate resins, polyvinyl acetate latexes, methyl methacrylate resins, acrylic resins, styrenic resins, styrene-acrylic resins, linseed resins, soya oil resins, alkyd resins and combinations thereof. Particularly preferred binder (a) is selected from acrylic resins, styrene-acrylic resins and combinations thereof. Examples of binders can be selected from products like Arkema Encor DT 250, Arkema Encor DT 400, Arkema Encor DT 211 or Arkema Encor DT 100.

According to the invention, pigment (b) can be selected in a number of categories of pigments. Organic pigments or inorganic pigments can be included in the composition according to the invention. Preferably, pigment (b) is a coloring pigment. More preferably pigment (b) is a coloring pigment selected from a white coloring pigment, a yellow coloring pigment, an orange coloring pigment, a red coloring pigment, a blue coloring pigment, a green coloring pigment and a black coloring pigment.
Also preferably, pigment (b) is selected from titanium dioxide, zinc dioxide, zinc sulfide, barium dioxide, barium sulfate, lithopone, carbon black, organic pigments and combinations thereof. Most preferred pigment (b) is selected from titanium dioxide and organic pigments.

Polymer (c) is an essential component of the composition according to the invention. Polymer (c) primarily acts as a dispersing agent within the composition according to the invention, in particular for dispersing pigment (b). Preferably, polymer (c) is obtained from a polymerization reaction of acrylic acid.
More preferably, polymer (c) is partially or totally neutralized. Even more preferably it is totally neutralized.

Polymer (c) is neutralized by at least one divalent cation selected from cations of Ca, Mg, Zn. Polymer (c) can also be neutralized by at least one divalent cation selected from cations of Ca, Mg, Zn and by at least one monovalent cation selected from cations of Na, K, Li. Polymer (c) can also be neutralized by at least one divalent cation selected from cations of Ca, Mg, Zn and by at least one amino compound. Most preferably, polymer (c) is totally or partially neutralized by Ca.
Preferred polymer (c) according to the invention is totally or partially neutralized by at least one divalent cation and at least one monovalent cation, in a (divalent cation / monovalent cation) molar ratio from 0.1 to 10, more preferably from 0.2 to 5, even more preferably from 0.8 to 3 and most preferably from 1 to 2.5. In such a preferred polymer (c) according to the invention, the divalent cation can be replaced by at least one amino compound.
More preferred polymer (c) according to the invention is totally or partially neutralized by at least one divalent cation selected from cations of Ca, Mg, Zn and a least one monovalent cation selected from cations of Na, K, Li, in a (divalent cation / monovalent cation) molar ratio from 0.1 to 10, more preferably from 0.2 to 5, even more preferably from 0.8 to 3 and most preferably from 1 to 2.5. In such a more preferred polymer (c) according to the invention the divalent cation can be replaced by at least one amino compound. Particularly preferred polymer (c) according to the invention is totally neutralized by Na and Ca, in particular in a Na/Ca molar ratio from 0.1 to 10. More preferably, the Na/Ca molar ratio is from 0.2 to 5, even more preferably from 0.8 to 3 and most preferably from 1 to 2.5.
Also preferably, polymer (c) according to the invention can be totally or partially neutralized by Ca and Na, Mg and Na, Ca and K, Mg and K, Ca and Mg and Na, Ca and Mg and K, Ca and Na and K, Mg and Na and K, Ca and Mg and Na and K, in particular in a (divalent cation / monovalent cation) molar ratio from 0.1 to 10, more preferably from 0.2 to 5, even more preferably from 0.8 to 3 and most preferably from 1 to 2.5.
Various compounds can be used for the neutralization of polymer (c). Preferably, polymer (c) is partially or totally neutralized, by mean of at least one compound selected from Ca(OH)₂, Mg(OH)₂, Ba(OH)₂, CaO, MgO, ZnO, NaOH, KOH, LiOH and combinations thereof.

According to the invention, polymer (c) has a pH that can vary. Preferably, this pH is greater than 5, even preferably greater than 5.5 or greater than 6. Also preferably, this pH is below than 10.

According to the invention, polymer (c) has a molecular weight (Mw - measured by SEC) that can vary. Preferably, polymer (c) has a molecular weight (Mw - measured by SEC) below 15,000 g/mol or below 12,000 g/mol, preferably below 10,000 g/mol or between 1,000 and 10,000 g/mol, equally preferably below 8,000 g/mol or between 1,000 and 8,000 g/mol, more preferably below 6,500 g/mol or between 1,500 and 6,500 g/mol, even more preferably below 6,000 g/mol or between 2,000 and 6,000 g/mol.

According to the invention, polymer (c) has a polymolecular index that can vary. Preferably, polymer (c) has a polymolecular index below 3.5, more preferably below 3 or below 2.8. Even more preferably, polymer (c) has a polymolecular index below 2.5 or below 2.2.

According to the invention, polymer (c) can be selected from homopolymers (c) of one monomer selected from acrylic acid, methacrylic acid, itaconic acid and their salts and copolymers (c) of at least one further monomer and at least of one monomer selected from acrylic acid, methacrylic acid, itaconic acid and their salts.

Preferred homopolymers (c) according to the invention can be selected from homopolymers of acrylic acid.

According to the invention, the further monomer useful for preparing copolymers (c) according to the invention is preferably selected from:
- at least one anionic monomer selected acrylic acid, methacrylic acid, itaconic acid, maleic acid, maleic anhydride, crotonic acid and their salts ;
- at least one non-ionic monomer selected from esters of a carboxylic acid, preferably esters of acids selected from acrylic acid, methacrylic acid, itaconic acid, maleic acid, maleic anhydride, crotonic acid; more preferably selected from styryl-vinylcaprolactam, alkylacrylate, in particular C₁-C₁₀-alkyl-acrylate or C₁-C₄-alkylacrylate, more preferably selected from methyl-acrylate, ethyl-acrylate, propylacrylate, isobutyl-acrylate, n-butyl-acrylate, alkyl-methacrylate, in particular C₁-C₁₀-alkyl-methacrylate or C₁-C₄-alkyl-methacrylate, more preferably methylmethacrylate, ethyl-methacrylate, propyl-methacrylate, isobutyl-methacrylate, n-butyl-methacrylate, aryl-acrylate, preferably phenylacrylate, benzylacrylate, phenoxyethylacrylate, aryl-methacrylate, preferably phenylmethacrylate, benzylmethacrylate, phenoxyethylmethacrylate, hydro xyethyl-acrylate, hydroxypropyl-acrylate, hydroxyethylhexyl-acrylate, hydroxyethyl-methacrylate, hydroxypropyl-methacrylate, hydroxyethylhexyl-methacrylate, a compound of formula (I) :

   R¹-(L¹)ₘ-(L²)ₙ-R² (I)

   wherein :
   ∘ R¹ represents an acrylate group that can be polymerized or a methacrylate group that can be polymerized,
   ∘ R² represents OH or OCH₃,
   ∘ L¹ and L², identical or different, independently represent an ethylene-oxy group or an oxy-propylene group and
   ∘ m and n, identical or different, at least one not being null, represent a number below or equal to 150 and their sum m + n is below 150 ;
- 2-acrylamido-2-methylpropane-sulfonic acid (AMPS), a salt of 2-acrylamido-2-methylpropane-sulfonic acid, 2-(methacryloyloxy)ethanesulfonic acid, a salt of 2-(methacryloyloxy)ethanesulfonic acid, sodium methallyl-sulfonate, sodium styryl-sulfonate, hydroxyethyl-phosphate-acrylate, hydroxypropyl-phosphate-acrylate, hydroxyethylhexyl-phosphate-acrylate, hydroxyethyl-phosphate-methacrylate, hydroxypropyl-phosphate-methacrylate, hydroxyethylhexyl-phosphate-methacrylate and combinations thereof.

Preferred copolymers (c) according to the invention can be selected from copolymers of acrylic acid and methacrylic acid, copolymers of acrylic acid, methacrylic acid and AMPS, copolymers of acrylic acid and AMPS, copolymers of acrylic acid and alkyl methacrylates (like ethyl methacrylate), copolymers of acrylic acid and alkyl acrylates (like ethyl acrylate), copolymers of acrylic acid, alkyl methacrylates (like ethyl methacrylate) and AMPS, copolymers of acrylic acid, alkyl acrylates (like ethyl acrylate) and AMPS, copolymers of acrylic acid and itaconic acid, copolymers of acrylic acid, itaconic acid and AMPS.

Equally preferred copolymers (c) according to the invention are obtained further to at least one polymerization reaction of 70 to 99.5 weight % of at least one monomer selected from acrylic acid, methacrylic acid, itaconic acid and their salts, and of 0.5 to 30 weight % of at least one further monomer as herein-defined.

Homopolymer (c) and copolymer (c) according to the invention can be prepared by known radical polymerization methods, for example they can be prepared in solution, in direct emulsion or in inversed emulsion, in suspension or in precipitation from an appropriate solvent. They can be prepared in presence of at least one catalytic system and in presence of at least one chain transfer agent.

They can be prepared by controlled radical polymerization methods, for example such methods controlled by nitroxides (NMP) or controlled by cobaloximes, or prepared by atom transfer radical polymerization (ATRP) methods. Radical polymerization methods controlled by sulfur derivatives chosen from carbamates, dithioesters, trithiocarbonates (RAFT) and xanthates can also be implemented for the preparation of homopolymer (c) or of copolymer (c) according to the invention.

Examples of initiators are hydrogen peroxide or various persulfate derivatives. Examples of chain transfer agents are copper sulfate or various hypophosphite derivatives like sodium hypophosphite, potassium hypophosphite, calcium hypophosphite, hypophosphorous acid, mercaptan derivatives, secondary alcohols and thiolactic acid. Initiators and chain transfer agents can be combined.

The composition according to the invention is an aqueous composition but it can also include at least one solvent in admixture with water. Preferably, such a solvent is selected from water miscible organic solvents, such as alcohols and glycol ethers. Examples of such solvents can be selected from Texanol ester alcohol (CAS # 25265-77-4), Dowanol dipropylene glycol methyl ether (CAS# 34590-94-8), Dowanol propylene glycol methyl ether (CAS# 107-98-2), Dowanol propylene glycol n-propyl ether (CAS # 1569-01-3), Dowanol dipropylene glycol n-propyl ether (CAS # 29911-27-1), Dowanol dipropylene glycol n-butyl ether (CAS # 29911-28-2), Butyl Cellosolve ethylene glycol monobutyl ether (CAS # 111-76-2), Butyl Carbitol dietheylene glycol monobutyl ether (CAS# 112-34-5), Methyl Carbitol dietheylene glycol monomethyl ether (CAS# 111-77-3), diisobutyl ketone (CAS # 108-83-8), methanol (CAS # 67-56-1).

In addition to binder (a), pigment (b) and polymer (c), the composition according to the invention can comprise further components. Preferably, the composition according to the invention further comprises at least one extender compound, preferably at least one compound selected from natural calcium carbonate, synthetic calcium carbonate, barium carbonate, talc, clays, silicas, silicates and combinations thereof.

The composition according to the invention can additionally comprise at least one further additive, preferably at least one additive selected from thickeners, rheology modifiers, dyes, artificial light reflecting agents, natural light reflecting agents, sequestering agents, biocides, dispersants, fillers (for example microspheres or beads of a material selected from glass, polymer, quartz and sand), anti-freeze agents, plasticizers, adhesion promoters, coalescence agents, wetting agents, waxes, surfactants, slip additives, crosslinking agents, defoamers, colorants, preservatives, freeze protectors, thaw protectors, corrosion inhibitors, alkali soluble polymers, water soluble polymers and combinations thereof.

The invention not only provides a composition but also provides various methods derived from this composition or for implementing this composition.

The invention thus also provides a method (M1) for preparing an aqueous marking composition for hard surface substrate comprising adding at least one polymer (c)
- obtained further to at least one polymerization reaction of at least one monomer selected from acrylic acid, methacrylic acid, itaconic acid and their salts, and
- partially or totally neutralized
   - by at least one divalent cation or
   - by at least one divalent cation and at least one monovalent cation or
   - by at least one divalent cation and at least one amino compound;
to an aqueous composition also comprising at least one binder (a) and at least one pigment (b).

The invention also provides a method (M2) for marking a hard surface substrate comprising the application to the surface of the substrate of at least one aqueous marking composition, comprising:
(a) at least one binder;
(b) at least one pigment;
(c) at least one polymer
   - obtained further to at least one polymerization reaction of at least one monomer selected from acrylic acid, methacrylic acid, itaconic acid and their salts, and
   - partially or totally neutralized
      - by at least one divalent cation or
      - by at least one divalent cation and at least one monovalent cation or
      - by at least one divalent cation and at least one amino compound.

Preferably, for method (M2) according to the invention, the composition is applied by a method selected from air spray, air-assisted airless spray, high volume-low pressure (HVLP) spray, low volume-low pressure (LVLP) spray, hot spray, airless spray, roll, brush, curtain, flood, and dip-coating methods. Also preferably, for method (M2) according to the invention, the composition is contacted with at least one coagulant agent further to its application on the substrate.

The invention also provides a method (M3) for improving stability of an aqueous marking composition for hard surface substrate. Method (M3) according to the invention comprises adding to an aqueous composition also comprising at least one binder and at least one pigment, at least one polymer
- obtained further to at least one polymerization reaction of at least one monomer selected from acrylic acid, methacrylic acid, itaconic acid and their salts, and
- partially or totally neutralized
   - by at least one divalent cation or
   - by at least one divalent cation and at least one monovalent cation or
   - by at least one divalent cation and at least one amino compound.

The invention also provides a method (M4) for improving drying time of an aqueous marking composition for hard surface substrate. Method (M4) according to the invention comprises adding to an aqueous composition also comprising at least one binder and at least one pigment, at least one polymer
- obtained further to at least one polymerization reaction of at least one monomer selected from acrylic acid, methacrylic acid, itaconic acid and their salts, and
- partially or totally neutralized
   - by at least one divalent cation or
   - by at least one divalent cation and at least one monovalent cation or
   - by at least one divalent cation and at least one amino compound.

For methods (M1), (M2), (M3) or (M4) according to the invention, the composition or the substrate are defined according to the composition or to the substrate according to the invention. In addition, the preferred, particular, advantageous or specific features of the composition according to the invention allow defining corresponding preferred, particular, advantageous or specific methods (M1), (M2), (M3) and (M4) according to the invention.

The following examples provide specific illustrations of the various aspects of the invention.

### Example 1: preparation of polymer (c1) according to the invention

In a synthesis reactor fitted with a mechanical stirring system and a heating system of oil bath type, are introduced:
- water : 241.069 g,
- copper sulfate pentahydrate : 0.323 g,
- ferrous sulfate heptahydrate : 0.276 g.

The medium is heated to 95 °C, and then the following elements are simultaneously and continuously added, over 2 hours:
- an aqueous solution of 3.5 g of 20.9 wt. % DPTTC sodium salt (CAS # 86470-33-2), diluted in 31 g of water,
- 35.3 g of hydrogen peroxide 130 V diluted in 9.4 g of water and
- 279.9 g of acrylic acid diluted in 31 g of water.

Cooking continues for 1.5 h at 95 °C.

A solution of polyacrylic acid having a Mw of 5,700 g/mol and an Ip of 2.5 is obtained. The solution of polyacrylic acid is treated with:
- caustic soda 50 wt. % in water: 145 g,
- water: 66.660 g,
- hydrated lime 97 wt. % in water: 42.5 g.

The pH of resulting polymer (c1) is finally adjusted to 8.7 with soda and to a final concentration of 38 % dry matter in water.

### Example 2: preparation of polymer (c2) according to the invention

In a synthesis reactor fitted with a mechanical stirring system and a heating system of oil bath type, are introduced:
- water 163.4 g,
- sodium hypophosphite solution 50 wt. % in water: 3.17 g.

The medium is heated to 97 °C, and then the following elements are simultaneously and continuously added, over 3 hours:
- a solution of 2.12 g of sodium persulfate, diluted in 58.3 g of water,
- 14.3 g of a sodium hypophosphite solution (50 wt. % in water) diluted in 47 g of water,
- 254.2 g of acrylic acid diluted with 19 g of water.

Cooking continues for 30 min at 95°C.

A solution of polyacrylic acid having a Mw of 4,500 g/mol and an Ip of 2.25 is obtained. The solution of polyacrylic acid is treated with:
- caustic soda 50 wt. % in water: 78.7 g,
- water: 150 g,
- hydrated lime 97 wt. % in water: 68.6 g.

The pH of resulting polymer (c2) is finally adjusted to 8.5 with soda and to a final concentration of 35 % dry matter in water.

### Example 3: evaluations of polymers (c1) and (c2)

Properties of polymers (c1) and (c2) according to the invention have been compared to comparative polymers that are:
- comparative polymer (cp1) is homopolymer of methacrylic acid that is 100 wt. % ammonium neutralized: Tamol 901 (Dow Chemicals),
- comparative polymer (cp2) is homopolymer of acrylic acid that is 100 wt. % ammonium neutralized: Tamol 963 (Dow Chemicals),
- comparative polymer (cp3) is homopolymer of methacrylic acid that is 100 wt. % sodium neutralized: Tamol 851 (Dow Chemicals),
- comparative polymer (cp4) is homopolymer of acrylic acid that is 100 wt. % sodium neutralized: Rhodoline 226/35 851 (Solvay),
- comparative polymer (cp5) is homopolymer of acrylic acid that is 100 wt. % sodium neutralized: Ecodis P30 (Coatex),
- comparative polymer (cp6) is homopolymer of acrylic acid that is 100 wt. % ammonium neutralized: Ecodis P90 (Coatex),
- comparative polymer (cp7) is homopolymer of acrylic acid that is 100 wt. % sodium neutralized: Ecodis P50 (Coatex).

Traffic paint compositions have been prepared by using polymers (c) according to the invention by mixing the various components. Similarly, comparative paint compositions have been prepared that include known polymers. Products and respective amounts have been employed and introduced according to table 1.

**Table 1**

| paint composition components | | kilograms | liter |
|---|---|---|---|
| binder | Encor DT 250 (Arkema) | 192.78 | 187.00 |
| solvent | water | 16.78 | 16.66 |
| preservative | Proxel GXL (Excel) | 0.91 | 0.76 |
| surfactant | Triton CF-10 (Dow) | 0.91 | 0.76 |
| defoamer | Drewplus L-475 (Ashland) | 1.36 | 1.14 |
| dispersant | polymer (c) | 4.54 | 3.79 |
| titanium dioxide | Tronox CR-828 (Tronox) | 45.36 | 11.36 |
| calcium carbonate | Omyacarb 5-FL (Omya) | 299.37 | 110.91 |
| coalescing solvent | Texanol (Eastman) | 9.07 | 9.46 |
| defoamer | Drewplus L-475 (Ashland) | 0.91 | 1.14 |
| solvent | methanol | 15.88 | 20.06 |
| cellulosic thickener | Natrosol 250 HBR (Ashland) | 0.09 | 0.38 |
| solvent | water | 14.97 | 15.14 |
| | total | 602.92 | 378.54 |

The components were mixed for 15 minutes. The fineness of dispersions has been evaluated in accordance with ASTM D1210 of 2005 (Test Method for Fineness of Dispersion of Pigment-Vehicle Systems by Hegman-Type Gage). The components were allowed to mix for 15 minutes or until the fineness of grind was not less than 4 Hegman units. The results obtained are presented in table 2.

**Table 2**

| Polymer | grinding time (min) |
|---|---|
| (c1) | 15 |
| (c2) | 15 |
| (cp1) | 45 |
| (cp2) | 45 |
| (cp3) | 60 |
| (cp6) | 60 |

Using polymers (c1) and (c2) according to the invention allows better grinding efficiency, or faster grinding time versus comparative polymers.

Coating films prepared with paint compositions comprising dispersions of pigments using polymers (c) according to the invention and comparative polymers have been evaluated. This evaluation has been performed in accordance with ASTM D 823 of 1995 (Practices for Producing Films of Uniform Thickness of Paint, Varnish, and Related Products on Test Panels - reapproved in 2001). The results obtained are presented in table 3.

**Table 3**

| polymer | Hegman value at 15 min |
|---|---|
| (c1) | 5.5 |
| (c2) | 5.5 |
| (cp1) | 3 |
| (cp2) | 3 |
| (cp3) | 3 |
| (cp6) | 3 |

Polymers (c1) and (c2) according to the invention allows higher Hegman values at 15 minutes versus comparative polymers.

Stability of dispersions of pigments using polymers (c) according to the invention and comparative polymers has been evaluated. This evaluation has been is performed in accordance with ASTM D 1849 of 1995 (Test Method for Package Stability of Paint - reapproved in 2014). Samples were evaluated for 1 week at 60 °C. The results are presented in table 4.

**Table 4**

| polymer | stability (delta KU) |
|---|---|
| (c1) | 7.2 |
| (c2) | 18.2 |
| (cp1) | 48.0 |
| (cp2) | gelled |
| (cp3) | gelled |
| (cp4) | 41.5 |
| (cp5) | 49.0 |
| (cp6) | gelled |
| (cp7) | 47.4 |

Using polymers (c1) and (c2) allows less increase in KU versus comparative polymers without any gel formation. On the contrary, comparative using comparative polymers (cp2), (cp3), and (cp7) caused the paint to gel so it was not possible to measure the KU viscosity.

75 % humidity dry time of dispersions of pigments using polymers (c) according to the invention and comparative polymers has been evaluated. This evaluation has been performed in accordance with ASTM D 711 of 2010 (Test Method for No Pick-Up Time of Traffic Paint). A steel cylinder fitted with two replaceable O-rings that is rolled down a ramp over a film drawdown over a glass panels with a wet film thickness of 381 µm (corresponding to US 15 mils), has been used. The results obtained are presented in table 5.

**Table 5**

| polymer | 75 % humidity dry time (min) |
|---|---|
| (c2) | 11 |
| (cp1) | 25 |
| (cp2) | gelled |
| (cp3) | 22 |
| (cp4) | 15 |

Using polymers (c2) according to the invention allows faster dry time for polymer (c2) versus comparative polymers. Comparative polymer (cp2) gelled overnight thus the dry time could not be measured.

Set-to-touch time for 50 % humidity dry time of dispersions of pigments using polymers (c) according to the invention and comparative polymers has been evaluated. This evaluation has been performed in accordance with ASTM D 1640 of 2003 (Standard Test Methods for Drying, Curing, or Film Formation of Organic Coatings at Room Temperature, Procedure 7.2 Set-To-Touch Time for 50% humidity dry time). The results obtained are presented in table 6.

**Table 6**

| Polymer | 50 % humidity dry time (min) |
|---|---|
| (c2) | 5 |
| (cp1) | 6 |
| (cp3) | 7 |
| (cp4) | 8 |
| (cp5) | 7 |
| (cp6) | 8 |
| (cp7) | 6 |

Faster dry time can be obtained while using polymer (c2) according to the invention versus using comparative polymers.

## Claims

1. An aqueous hard surface substrate marking composition comprising:
(a) at least one binder;
(b) at least one pigment;
(c) at least one polymer
- obtained further to at least one polymerization reaction of at least one monomer selected from acrylic acid, methacrylic acid, itaconic acid and their salts, and
- partially or totally neutralized
• by at least one divalent cation or
• by at least one divalent cation and at least one monovalent cation or
• by at least one divalent cation and at least one amino compound.

2. The composition according to claim 1 wherein the substrate is selected from wood, reconstituted wood products, concrete, asphalt, cement, fiber cement, stone, marble, clay, plaster, masonry, wallboard, paper, cardboard, ferrous metal, non-ferrous metal, plastics (for example, polystyrene, polyethylene, ABS, polyurethane, polyethylene terphthalate, polybutylene terphthalate, polypropylene, polyphenylene, polycarbonate, polyacrylate, PVC, polysulfone or mixtures thereof) and combinations thereof ; preferably concrete, asphalt, cement, fiber cement, stone, marble, clay or combinations thereof.

3. The composition according to one of claims 1 or 2 wherein binder (a):
- has glass transition temperature (T_{g}) greater than -40 °C or below the application temperature of the composition, preferably a T_{g} between -40 and 150 °C, more preferably a T_{g} between -20 and 100 °C or between -10 and 60 °C, in particular between 0 and 50 °C ; or
- is a polymer latex or is selected from polyvinyl acetate resins, polyvinyl acetate latexes, methyl methacrylate resins, acrylic resins, styrenic resins, styrene-acrylic resins, linseed resins, soya oil resins, alkyd resins and combinations thereof ; preferably acrylic resins, styrene-acrylic resins and combinations thereof ; or
- renders the composition being capable of forming a film at ambient temperature or at a greater temperature, preferably at a temperature between 20 and 55 °C.

4. The composition according to one of claims 1 to 3 wherein pigment (b):
- is an organic pigment or an inorganic pigment; or
- is a coloring pigment, preferably a coloring pigment selected from a white coloring pigment, a yellow coloring pigment, an orange coloring pigment, a red coloring pigment, a blue coloring pigment, a green coloring pigment and a black coloring pigment; or
- is selected from titanium dioxide, zinc dioxide, zinc sulfide, barium dioxide, barium sulfate, lithopone, carbon black, organic pigments and combinations thereof ; preferably from titanium dioxide and organic pigments.

5. The composition according to one of claims 1 to 4 wherein polymer (c):
- is obtained from a polymerization reaction of acrylic acid ; or
- is partially or totally neutralized, preferably totally neutralized,
• by at least one divalent cation selected from cations of Ca, Mg, Zn or
• by at least one divalent cation selected from cations of Ca, Mg, Zn and by at least one monovalent cation selected from cations of Na, K, Li ; or
• by at least one divalent cation selected from cations of Ca, Mg, Zn and by at least one amino compound ; or
- is partially or totally neutralized, by mean of at least one compound selected from Ca(OH)₂, Mg(OH)₂, Ba(OH)₂, CaO, MgO, ZnO, NaOH, KOH, LiOH and combinations thereof ; or
- has a pH greater than 5, preferably greater than 5.5 or greater than 6 ; or
- has a pH below 10 ; or
- has a molecular weight (Mw - measured by SEC) below 15,000 g/mol or below 12,000 g/mol, preferably below 10,000 g/mol or between 1,000 and 10,000 g/mol, equally preferably below 8,000 g/mol or between 1,000 and 8,000 g/mol, more preferably below 6,500 g/mol or between 1,500 and 6,500 g/mol, even more preferably below 6,000 g/mol or between 2,000 and 6,000 g/mol; or
- has a polymolecular index below 3.5, preferably below 3 or below 2.8, more preferably below 2.5 or below 2.2.

6. The composition according to one of claims 1 to 5 wherein polymer (c) is totally or partially neutralized by at least one divalent cation and at least one monovalent cation, in a (divalent cation / monovalent cation) molar ratio from 0.1 to 10, more preferably from 0.2 to 5, even more preferably from 0.8 to 3 and most preferably from 1 to 2.5.

7. The composition according to one of claims 1 to 6 wherein polymer (c) is totally or partially neutralized by at least one divalent cation selected from cations of Ca, Mg, Zn and a least one monovalent cation selected from cations of Na, K, Li, in a (divalent cation/monovalent cation) molar ratio from 0.1 to 10, more preferably from 0.2 to 5, even more preferably from 0.8 to 3 and most preferably from 1 to 2.5.

8. The composition according to one of claims 1 to 7 wherein polymer (c) is totally neutralized by Na and Ca, preferably in a Na/Ca molar ratio from 0.1 to 10, more preferably from 0.2 to 5, even more preferably from 0.8 to 3 and most preferably from 1 to 2.5.

9. The composition according to one of claims 1 to 8 further comprising:
• at least one extender compound, preferably at least one compound selected from natural calcium carbonate, synthetic calcium carbonate, barium carbonate, talc, clays, silicas, silicates and combinations thereof ; or
• at least one solvent in admixture with water, preferably a solvent selected from water miscible organic solvents, such as alcohols and glycol ethers ; or
• at least one additive selected from thickeners, rheology modifiers, dyes, artificial light reflecting agents, natural light reflecting agents, sequestering agents, biocides, dispersants, fillers (for example microspheres or beads of a material selected from glass, polymer, quartz and sand), anti-freeze agents, plasticizers, adhesion promoters, coalescence agents, wetting agents, waxes, surfactants, slip additives, crosslinking agents, defoamers, colorants, preservatives, freeze protectors, thaw protectors, corrosion inhibitors, alkali soluble polymers, water soluble polymers and combinations thereof.

10. A method (M1) for preparing an aqueous marking composition for hard surface substrate comprising adding at least one polymer
- obtained further to at least one polymerization reaction of at least one monomer selected from acrylic acid, methacrylic acid, itaconic acid and their salts, and
- partially or totally neutralized:
• by at least one divalent cation or
• by at least one divalent cation and at least one monovalent cation or
• by at least one divalent cation and at least one amino compound ;
to an aqueous composition also comprising at least one binder and at least one pigment.

11. A method (M2) for marking a hard surface substrate comprising the application to the surface of the substrate of at least one aqueous marking composition, comprising:
(a) at least one binder;
(b) at least one pigment;
(c) at least one polymer
- obtained further to at least one polymerization reaction of at least one monomer selected from acrylic acid, methacrylic acid, itaconic acid and their salts, and
- partially or totally neutralized:
• by at least one divalent cation or
• by at least one divalent cation and at least one monovalent cation or
• by at least one divalent cation and at least one amino compound.

12. The method according to claim 11 wherein the composition:
- is applied by a method selected from air spray, air-assisted airless spray, HVLP spray, LVLP spray, hot spray, airless spray, roll, brush, curtain, flood, and dip-coating methods ; or
- is contacted with at least one coagulant agent further to its application on the substrate.

13. A method (M3) for improving stability of an aqueous marking composition for hard surface, comprising adding at least one polymer:
- obtained further to at least one polymerization reaction of at least one monomer selected from acrylic acid, methacrylic acid, itaconic acid and their salts, and
- partially or totally neutralized:
• by at least one divalent cation or
• by at least one divalent cation and at least one monovalent cation or
• by at least one divalent cation and at least one amino compound ;
to an aqueous composition also comprising at least one binder and at least one pigment.

14. A method (M4) for improving drying time of an aqueous marking composition for hard surface, comprising adding at least one polymer:
- obtained further to at least one polymerization reaction of at least one monomer selected from acrylic acid, methacrylic acid, itaconic acid and their salts, and
- partially or totally neutralized:
• by at least one divalent cation or
• by at least one divalent cation and at least one monovalent cation or
• by at least one divalent cation and at least one amino compound ;
to an aqueous composition also comprising at least one binder and at least one pigment.

15. The method according to one of claims 10 to 14 wherein the composition or the substrate are defined according to one of claims 1 to 9.

## Patentansprüche

1. Wässrige Zusammensetzung zur Markierung von Substraten mit harter Oberfläche, umfassend:
(a) mindestens ein Bindemittel;
(b) mindestens ein Pigment;
(c) mindestens ein Polymer,
- ferner erhalten im Anschluss an mindestens eine Polymerisationsreaktion von mindestens einem Monomer, ausgewählt aus Acrylsäure, Methacrylsäure, Itaconsäure und deren Salzen, und
- teilweise oder vollständig neutralisiert
• durch mindestens ein divalentes Kation oder
• durch mindestens ein divalentes Kation und mindestens ein monovalentes Kation oder
• durch mindestens ein divalentes Kation und mindestens eine Aminoverbindung.

2. Zusammensetzung nach Anspruch 1, wobei das Substrat ausgewählt ist aus Holz, rekonstituierten Holzprodukten, Beton, Asphalt, Zement, Faserzement, Stein, Marmor, Ton, Gips, Mauerwerk, Pappe, Karton, Eisenmetallen, Nicht-Eisenmetallen, Kunststoffen (z. B. Polystyrol, Polyethylen, ABS, Polyurethan, Polyethylenterphthalat, Polybutylenterphthalat, Polypropylen, Polyphenylen, Polycarbonat, Polyacrylat, PVC, Polysulfon oder Mischungen davon) und Kombinationen davon; bevorzugt Beton, Asphalt, Zement, Faserzement, Stein, Marmor, Ton oder Kombinationen davon.

3. Zusammensetzung nach einem der Ansprüche 1 oder 2, wobei Bindemittel (a):
- eine Glasübergangstemperatur (T_{g}) aufweist, die größer als -40 °C oder kleiner als die Anwendungstemperatur der Zusammensetzung ist, bevorzugt eine T_{g} zwischen -40 und 150 °C, noch bevorzugter eine T_{g} zwischen -20 und 100 °C oder zwischen -10 und 60 °C, insbesondere zwischen 0 und 50 °C ist; oder
- ein Polymerlatex ist oder ausgewählt ist aus Polyvinylacetat-Harzen, Polyvinylacetat-Latexen, Methylmethacrylat-Harzen, Acrylharzen, Styrolharzen, Styrol-Acryl-Harzen, Leinsamenharzen, Sojaöl-Harzen, Alkydharzen und Kombinationen davon; bevorzugt Acrylharzen, Styrol-Acryl-Harzen und Kombinationen davon; oder
- bewirkt, dass die Zusammensetzung in der Lage ist, bei Umgebungstemperatur oder bei einer höheren Temperatur, bevorzugt bei einer Temperatur zwischen 20 und 55 °C, einen Film zu bilden.

4. Zusammensetzung nach einem der Ansprüche 1 bis 3, wobei Pigment (b):
- ein organisches Pigment oder ein anorganisches Pigment ist; oder
- ein farbgebendes Pigment ist, bevorzugt ein farbgebendes Pigment, ausgewählt aus einem weißen farbgebenden Pigment, einem gelben farbgebenden Pigment, einem orangen farbgebenden Pigment, einem roten farbgebenden Pigment, einem blauen farbgebenden Pigment, einem grünen farbgebenden Pigment und einem schwarzen farbgebenden Pigment; oder
- aus Titandioxid, Zinkdioxid, Zinksulfid, Bariumdioxid, Bariumsulfat, Lithopon, Ruß, organischen Pigmenten und Kombinationen davon ausgewählt ist; bevorzugt aus Titandioxid und organischen Pigmenten.

5. Zusammensetzung nach einem der Ansprüche 1 bis 4, wobei Polymer (c):
- aus einer Polymerisationsreaktion von Acrylsäure erhalten wird; oder
- teilweise oder vollständig neutralisiert, bevorzugt vollständig neutralisiert wird,
• durch mindestens ein divalentes Kation, ausgewählt aus Kationen von Ca, Mg, Zn oder
• durch mindestens ein divalentes Kation, ausgewählt aus Kationen von Ca, Mg, Zn, und durch mindestens ein monovalentes Kation, ausgewählt aus Kationen von Na, K, Li; oder
• durch mindestens ein divalentes Kation, ausgewählt aus Kationen von Ca, Mg, Zn und durch mindestens eine Aminoverbindung; oder
- mittels mindestens einer Verbindung, ausgewählt aus Ca(OH)₂, Mg(OH)₂, Ba(OH)2, CaO, MgO, ZnO, NaOH, KOH, LiOH und Kombinationen davon, teilweise oder vollständig neutralisiert wird; oder
- einen pH-Wert von mehr als 5, bevorzugt von mehr als 5,5 oder mehr als 6 aufweist; oder
- einen pH-Wert unter 10 aufweist; oder
- ein Molekulargewicht (Mw - gemessen durch SEC) unter 15.000 g/mol oder unter 12.000 g/mol, bevorzugt unter 10.000 g/mol oder zwischen 1.000 und 10.000 g/mol, ebenso bevorzugt unter 8.000 g/mol oder zwischen 1.000 und 8.000 g/mol, noch bevorzugter unter 6.500 g/mol oder zwischen 1.500 und 6.500 g/mol, sogar noch bevorzugter unter 6.000 g/mol oder zwischen 2.000 und 6.000 g/mol aufweist; oder
- einen polymolekularen Index unter 3,5, bevorzugt unter 3 oder unter 2,8, noch bevorzugter unter 2,5 oder unter 2,2 aufweist.

6. Zusammensetzung nach einem der Ansprüche 1 bis 5, wobei das Polymer (c) vollständig oder teilweise durch mindestens ein divalentes Kation und mindestens ein monovalentes Kation neutralisiert ist, in einem Molverhältnis (divalentes Kation / monovalentes Kation) von 0,1 bis 10, bevorzugter von 0,2 bis 5, noch bevorzugter von 0,8 bis 3 und am meisten bevorzugt von 1 bis 2,5.

7. Zusammensetzung nach einem der Ansprüche 1 bis 6, wobei das Polymer (c) vollständig oder teilweise durch mindestens ein divalentes Kation, ausgewählt aus Kationen von Ca, Mg, Zn, und mindestens ein monovalentes Kation, ausgewählt aus Kationen von Na, K, Li, in einem Molverhältnis (divalentes Kation / monovalentes Kation) von 0,1 bis 10, noch bevorzugter von 0,2 bis 5, sogar noch bevorzugter von 0,8 bis 3 und am meisten bevorzugt von 1 bis 2,5 neutralisiert ist.

8. Zusammensetzung nach einem der Ansprüche 1 bis 7, wobei das Polymer (c) vollständig durch Na und Ca neutralisiert ist, bevorzugt in einem Na/Ca-Molverhältnis von 0,1 bis 10, noch bevorzugter von 0,2 bis 5, sogar noch bevorzugter von 0,8 bis 3 und am meisten bevorzugt von 1 bis 2,5.

9. Zusammensetzung nach einem der Ansprüche 1 bis 8, ferner umfassend:
• mindestens eine Streckmittelverbindung, bevorzugt mindestens eine Verbindung, ausgewählt aus natürlichem Kalziumkarbonat, synthetischem Kalziumkarbonat, Bariumkarbonat, Talkum, Tonen, Kieselsäuren, Silikaten und Kombinationen davon; oder
• mindestens ein Lösungsmittel im Gemisch mit Wasser, bevorzugt ein Lösungsmittel, ausgewählt aus mit Wasser mischbaren organischen Lösungsmitteln, wie z. B. Alkoholen und Glykolethern; oder
• mindestens einen Zusatzstoff, ausgewählt aus Verdickungsmitteln, Rheologiemodifikatoren, Farbstoffen, künstlichen Lichtreflexionsmitteln, natürlichen Lichtreflexionsmitteln, Sequestriermitteln, Bioziden, Dispergiermitteln, Füllstoffen (z. B. Mikrokugeln oder Kügelchen aus einem Material, das aus Glas, Polymer, Quarz und Sand ausgewählt ist), Frostschutzmitteln, Weichmachern, Haftvermittlern, Koaleszenzmitteln, Netzmitteln Wachsen, Tensiden, Gleitadditiven, Vernetzungsmitteln, Entschäumern, Farbstoffen, Konservierungsmitteln, Gefrierschutzmitteln, Auftauschutzmitteln, Korrosionsinhibitoren, alkalilöslichen Polymeren, wasserlöslichen Polymeren und Kombinationen davon.

10. Verfahren (M1) zur Herstellung einer wässrigen Markierungszusammensetzung für ein Substrat mit harter Oberfläche, umfassend die Zugabe von mindestens einem Polymer,
- ferner erhalten im Anschluss an mindestens eine Polymerisationsreaktion von mindestens einem Monomer, ausgewählt aus Acrylsäure, Methacrylsäure, Itaconsäure und deren Salzen, und
- teilweise oder vollständig neutralisiert:
• durch mindestens ein divalentes Kation oder
• durch mindestens ein divalentes Kation und mindestens ein monovalentes Kation oder
• durch mindestens ein divalentes Kation und mindestens eine Aminoverbindung;
zu einer wässrigen Zusammensetzung, die ebenfalls mindestens ein Bindemittel und mindestens ein Pigment umfasst.

11. Verfahren (M2) zum Markieren eines Substrats mit harter Oberfläche, umfassend das Aufbringen mindestens einer wässrigen Markierungszusammensetzung auf die Oberfläche des Substrats, umfassend:
(a) mindestens ein Bindemittel;
(b) mindestens ein Pigment;
(c) mindestens ein Polymer,
- ferner erhalten im Anschluss an mindestens eine Polymerisationsreaktion von mindestens einem Monomer, ausgewählt aus Acrylsäure, Methacrylsäure, Itaconsäure und deren Salzen, und
- teilweise oder vollständig neutralisiert:
• durch mindestens ein divalentes Kation oder
• durch mindestens ein divalentes Kation und mindestens ein monovalentes Kation oder
• durch mindestens ein divalentes Kation und mindestens eine Aminoverbindung.

12. Verfahren nach Anspruch 11, wobei die Zusammensetzung:
- durch ein Verfahren aufgetragen wird, das aus Luftspritz-, luftunterstützten Airless-Spritz-, HVLP-Spritz, LVLP-Spritz-, Heißspritz-, Airless-Spritz-, Rollen-, Pinsel-, Vorhang-, Flut- und Tauchbeschichtungsverfahren ausgewählt wird; oder
- ferner nach dem Auftragen auf das Substrat mit mindestens einem Koagulierungsmittel in Kontakt gebracht wird.

13. Verfahren (M3) zur Verbesserung der Stabilität einer wässrigen Markierungszusammensetzung für harte Oberflächen, umfassend die Zugabe mindestens eines Polymers:
- ferner erhalten im Anschluss an mindestens eine Polymerisationsreaktion von mindestens einem Monomer, ausgewählt aus Acrylsäure, Methacrylsäure, Itaconsäure und deren Salzen, und
- teilweise oder vollständig neutralisiert:
• durch mindestens ein divalentes Kation oder
• durch mindestens ein divalentes Kation und mindestens ein monovalentes Kation oder
• durch mindestens ein divalentes Kation und mindestens eine Aminoverbindung;
zu einer wässrigen Zusammensetzung, die ebenfalls mindestens ein Bindemittel und mindestens ein Pigment umfasst.

14. Verfahren (M4) zur Verbesserung der Trocknungszeit einer wässrigen Markierungszusammensetzung für harte Oberflächen, umfassend die Zugabe mindestens eines Polymers:
- ferner erhalten im Anschluss an mindestens eine Polymerisationsreaktion von mindestens einem Monomer, ausgewählt aus Acrylsäure, Methacrylsäure, Itaconsäure und deren Salzen, und
- teilweise oder vollständig neutralisiert:
• durch mindestens ein divalentes Kation oder
• durch mindestens ein divalentes Kation und mindestens ein monovalentes Kation oder
• durch mindestens ein divalentes Kation und mindestens eine Aminoverbindung;
zu einer wässrigen Zusammensetzung, die ebenfalls mindestens ein Bindemittel und mindestens ein Pigment umfasst.

15. Verfahren nach einem der Ansprüche 10 bis 14, wobei die Zusammensetzung oder das Substrat nach einem der Ansprüche 1 bis 9 definiert ist.

## Revendications

1. Composition aqueuse de marquage de substrat de surface dure comprenant :
(a) au moins un liant ;
(b) au moins un pigment ;
(c) au moins un polymère
- obtenu suite à au moins une réaction de polymérisation d'au moins un monomère choisi parmi l'acide acrylique, l'acide méthacrylique, l'acide itaconique et leurs sels, et
- partiellement ou totalement neutralisé
• par au moins un cation divalent ou
• par au moins un cation divalent et au moins un cation monovalent ou
• par au moins un cation divalent et au moins un composé aminé.

2. Composition selon la revendication 1, dans laquelle le substrat est choisi parmi le bois, des produits en bois reconstitué, le béton, l'asphalte, le ciment, le fibrociment, la pierre, le marbre, l'argile, le plâtre, des matériaux de maçonnerie, de la cloison sèche, le papier, le carton, du métal ferreux, du métal non ferreux, des plastiques (par exemple, le polystyrène, le polyéthylène, l'ABS, le polyuréthane, le polyéthylène téréphtalate, le polybutylène téréphtalate, le polypropylène, le polyphénylène, le polycarbonate, le polyacrylate, le PVC, le polysufone ou des mélanges de ceux-ci) et des combinaisons de ceux-ci ; de préférence le béton, l'asphalte, le ciment, le fibrociment, la pierre, le marbre, l'argile ou des combinaisons de ceux-ci.

3. Composition selon l'une des revendications 1 ou 2, dans laquelle le liant (a) :
- a une température de transition vitreuse (T_{g}) supérieure à -40 °C ou inférieure à la température d'application de la composition, de préférence une T_{g} entre -40 et 150 °C, de manière davantage préférée une T_{g} entre -20 et 100 °C ou entre -10 et 60 °C, en particulier entre 0 et 50 °C ; ou
- est un latex polymère ou est sélectionné parmi des résines d'acétate de polyvinyle, des latex d'acétate de polyvinyle, des résines de méthacrylate de méthyle, des résines acryliques, des résines styréniques, des résines styrène-acryliques, des résines de graines de lin, des résines d'huile de soja, des résines alkydes et des combinaisons de celles-ci ; de préférence des résines acryliques, des résines styrène-acryliques et des combinaisons de celles-ci ; ou
- rend la composition capable de former un film à température ambiante ou à une température plus élevée, de préférence à une température comprise entre 20 et 55 °C.

4. Composition selon l'une des revendications 1 à 3 dans laquelle le pigment (b) :
- est un pigment organique ou un pigment inorganique ; ou
- est un pigment colorant, de préférence un pigment colorant choisi parmi un pigment colorant blanc, un pigment colorant jaune, un pigment colorant orange, un pigment colorant rouge, un pigment colorant bleu, un pigment colorant vert et un pigment colorant noir ; ou
- est choisi parmi le dioxyde de titane, le dioxyde de zinc, le sulfure de zinc, le dioxyde de baryum, le sulfate de baryum, le lithopone, le noir de carbone, des pigments organiques et les combinaisons de ceux-ci ; de préférence parmi le dioxyde de titane et des pigments organiques.

5. Composition selon l'une des revendications 1 à 4 dans laquelle le polymère (c) :
- est obtenu à partir d'une réaction de polymérisation d'acide acrylique ; ou
- est partiellement ou totalement neutralisé, de préférence totalement neutralisé,
• par au moins un cation divalent choisi parmi les cations de Ca, Mg, Zn ou
• par au moins un cation divalent choisi parmi les cations de Ca, Mg, Zn et par au moins un cation monovalent choisi parmi les cations de Na, K, Li ; ou
• par au moins un cation divalent choisi parmi les cations de Ca, Mg, Zn et par au moins un composé aminé ; ou
- est partiellement ou totalement neutralisé, au moyen d'au moins un composé choisi parmi Ca(OH)₂, Mg(OH)₂, Ba(OH)₂, CaO, MgO, ZnO, NaOH, KOH, LiOH et des combinaisons de ceux-ci ; ou
- a un pH supérieur à 5, de préférence supérieur à 5,5 ou supérieur à 6 ; ou
- a un pH inférieur à 10 ; ou
- a un poids moléculaire (Mw - mesuré par chromatographie d'exclusion stérique) inférieur à 15 000 g/mol ou inférieur à 12 000 g/mol, de préférence inférieur à 10 000 g/mol ou entre 1 000 et 10 000 g/mol, de manière pareillement préférée inférieur à 8 000 g/mol ou entre 1 000 et 8 000 g/mol, de manière davantage préférée inférieur à 6 500 g/mol ou entre 1 500 et 6 500 g/mol, de manière préférée entre toutes inférieur à 6 000 g/mol ou entre 2 000 et 6 000 g/mol ; ou
- a un indice de polymolécularité inférieur à 3,5 ; de préférence inférieur à 3 ou inférieur à 2,8 ; de manière davantage préférée inférieur à 2,5 ou inférieur à 2,2.

6. Composition selon l'une des revendications 1 à 5, dans laquelle le polymère (c) est totalement ou partiellement neutralisé par au moins un cation divalent et au moins un cation monovalent, dans un rapport molaire (cation divalent/cation monovalent) de 0,1 à 10 ; de préférence de 0,2 à 5 ; de manière davantage préférée de 0,8 à 3 ; et de manière préférée entre toutes de 1 à 2,5.

7. Composition selon l'une des revendications 1 à 6, dans laquelle le polymère (c) est totalement ou partiellement neutralisé par au moins un cation divalent choisi parmi les cations de Ca, Mg, Zn et au moins un cation monovalent choisi parmi les cations de Na, K, Li, dans un rapport molaire (cation divalent/cation monovalent) de 0,1 à 10 ; de préférence de 0,2 à 5 ; de manière davantage préférée de 0,8 à 3 ; et de manière préférée entre toutes de 1 à 2,5.

8. Composition selon l'une des revendications 1 à 7, dans laquelle le polymère (c) est totalement neutralisé par Na et Ca, de préférence dans un rapport molaire Na/Ca de 0,1 à 10 ; de préférence de 0,2 à 5 ; de manière davantage préférée de 0,8 à 3 ; et de manière préférée entre toutes de 1 à 2,5.

9. Composition selon l'une des revendications 1 à 8, comprenant en outre :
• au moins un extenseur, de préférence au moins un composé choisi parmi le carbonate de calcium naturel, le carbonate de calcium synthétique, le carbonate de baryum, le talc, l'argile, la silice, les silicates et des combinaisons de ceux-ci ; ou
• au moins un solvant en mélange avec de l'eau, de préférence un solvant choisi parmi les solvants organiques miscibles dans l'eau, tels que les alcools et les éthers de glycol ; ou
• au moins un additif choisi parmi des épaississants, des modificateurs de rhéologie, des colorants, des agents réflecteurs de lumière artificiels, des agents réflecteurs de lumière naturels, des agents chélateurs, des biocides, des agents dispersants, des agents de remplissage (par exemple des microsphères ou des billes d'un matériau choisi parmi le verre, un polymère, du quartz et du sable), des agents anti-gel, des plastifiants, des promoteurs d'adhésion, des agents coalescents, des agents mouillants, des cires, des tensioactifs, des agents améliorant le glissant, des agents de réticulation, des agents antimousse, des colorants, des conservateurs, des protecteurs contre le gel, des protecteurs contre le dégel, des inhibiteurs de corrosion, des polymères solubles dans les alcalis, des polymères solubles dans l'eau et des combinaisons de ceux-ci.

10. Procédé (M1) pour la préparation d'une composition aqueuse de marquage pour substrat de surface dure comprenant l'ajout d'au moins un polymère
- obtenu suite à au moins une réaction de polymérisation d'au moins un monomère choisi parmi l'acide acrylique, l'acide méthacrylique, l'acide itaconique et leurs sels, et
- partiellement ou totalement neutralisé :
• par au moins un cation divalent ou
• par au moins un cation divalent et au moins un cation monovalent ou
• par au moins un cation divalent et au moins un composé aminé ;
en une composition aqueuse comprenant également au moins un liant et au moins un pigment.

11. Procédé (M2) pour marquer un substrat de surface dure comprenant l'application à la surface du substrat d'au moins une aqueuse composition de marquage, comprenant :
(a) au moins un liant ;
(b) au moins un pigment ;
(c) au moins un polymère
- obtenu suite à au moins une réaction de polymérisation d'au moins un monomère choisi parmi l'acide acrylique, l'acide méthacrylique, l'acide itaconique et leurs sels, et
- partiellement ou totalement neutralisé :
• par au moins un cation divalent ou
• par au moins un cation divalent et au moins un cation monovalent ou
• par au moins un cation divalent et au moins un composé aminé.

12. Procédé selon la revendication 11, dans lequel la composition :
- est appliquée par un procédé choisi parmi la pulvérisation d'air, la pulvérisation sans air assistée par air, la pulvérisation HVLP, la pulvérisation LVLP, la pulvérisation à chaud, la pulvérisation sans air, le rouleau, la brosse, par rideau, le détrempage et des procédés de dépôt par trempage ; ou
- est mise en contact avec au moins un agent coagulant après son application sur le substrat.

13. Procédé (M3) pour améliorer la stabilité d'une composition aqueuse de marquage pour surface dure, comprenant l'ajout d'au moins un polymère :
- obtenu suite à au moins une réaction de polymérisation d'au moins un monomère choisi parmi l'acide acrylique, l'acide méthacrylique, l'acide itaconique et leurs sels, et
- partiellement ou totalement neutralisé :
• par au moins un cation divalent ou
• par au moins un cation divalent et au moins un cation monovalent ou
• par au moins un cation divalent et au moins un composé aminé ;
à une composition aqueuse comprenant également au moins un liant et au moins un pigment.

14. Procédé (M4) pour améliorer le temps de séchage d'une composition aqueuse de marquage pour surface dure, comprenant l'ajout d'au moins un polymère :
- obtenu suite à au moins une réaction de polymérisation d'au moins un monomère choisi parmi l'acide acrylique, l'acide méthacrylique, l'acide itaconique et leurs sels, et
- partiellement ou totalement neutralisé :
• par au moins un cation divalent ou
• par au moins un cation divalent et au moins un cation monovalent ou
• par au moins un cation divalent et au moins un composé aminé ;
en une composition aqueuse comprenant également au moins un liant et au moins un pigment.

15. Procédé selon l'une des revendications 10 à 14, dans lequel la composition ou le substrat sont définis selon l'une des revendications 1 à 9.
